# FASCICULE DE BREVET EUROPEEN

(11) **EP 0 851 137 B1**
(45) Date de publication et mention de la délivrance du brevet: **17.07.2002**
(21) Numéro de dépôt: 97403060.3
(22) Date de dépôt: 16.12.1997
(51) Int. Cl.: F16D 25/08

(54) **Dispositif de manoeuvre d'embrayage à commande hydraulique**
Hydraulische Kupplungsbetätigungsvorrichtung
Hydraulically actuated clutch actuating device

(30) Priorité: 24.12.1996 FR 9615937
(43) Date de publication de la demande: 01.07.1998
(73) Titulaire: SKF FRANCE, F-92140 Clamart (FR)
(72) Inventeur: Ponson, Frédéric, 37230 Luyns (FR); Arnault, Benoît, 37100 Tours (FR); Houdayer, Christophe, 37000 Tours (FR); Collignon, Bertrand, 37540 Saint-Cyr-sur-Loire (FR)
(74) Mandataire: Casalonga, Axel

(56) Documents cités:
- DE-A- 3 504 086
- DE-A- 4 412 917
- DE-A- 4 427 942
- FR-A- 2 651 846
- GB-A- 2 259 555
- GB-A- 2 287 295
- US-A- 4 995 492

## Description

L'invention concerne le domaine des dispositifs de manoeuvre d'embrayage à commande hydraulique pour les embrayages à diaphragme, notamment pour véhicules automobiles.

Les dispositifs de type conventionnel, tels que décrits par le document GB-A-2 259 555, comportent une partie fixe munie d'une portion tubulaire extérieure et d'une portion tubulaire intérieure, les deux portions étant concentriques de façon à former entre elles une chambre annulaire borgne à l'intérieur de laquelle est monté un piston mobile axialement sous l'action d'un fluide sous pression introduit dans la chambre. Le piston se prolonge par un élément de manoeuvre venant coulisser sur la portion tubulaire intérieure, ladite partie tubulaire intérieure comportant une portion s'étendant axialement au-delà de la portion tubulaire extérieure. L'élément de manoeuvre supporte un roulement de butée et actionne celui-ci contre le diaphragme du mécanisme d'embrayage pour la manoeuvre de l'embrayage.

Dans ce type de mécanisme on cherche à éviter toute entrée de pollution à l'intérieur du mécanisme et plus particulièrement à proximité de l'entrée de la chambre annulaire. En effet, un dépôt de particules étrangères à cet endroit risquerait d'être entraîné par le va-et-vient axial du piston et, en s'introduisant entre le piston et les parois des portions tubulaires intérieures et extérieures par rapport auxquelles coulisse ledit piston, affecterait à la longue le fonctionnement correct du dispositif. Le fluide hydraulique risquerait alors de fuir en dehors de la chambre dans le dispositif de manoeuvre d'embrayage et dans l'embrayage lui-même.

Une solution conventionnelle de protection contre la pollution consiste à utiliser un soufflet disposé axialement entre le roulement de butée et la semelle de la partie fixe , de façon à créer une enceinte étanche à l'intérieur de laquelle se trouve enfermée une grande partie du dispositif, voir le document WO-A 96 24 782. Toutefois le coût d'un tel soufflet est relativement élevé. D'autre part la présence du soufflet induit un encombrement radial important qui empêche son utilisation dans certaines applications où une très grande compacité est requise. Enfin, le soufflet peut nécessiter l'utilisation de pièces supplémentaires pour sa fixation sur le roulement de butée ou sur la partie fixe.

La présente invention a pour objet de remédier aux inconvénients des dispositifs précités.

La présente invention a pour objet de proposer un dispositif d'embrayage pourvu d'un moyen d'étanchéité de très faible encombrement, économique et efficace.

Le dispositif de manoeuvre d'embrayage, selon l'invention, est du type comprenant un roulement de butée capable d'agir sur un diaphragme de mécanisme d'embrayage, un dispositif de commande hydraulique pourvu d'une partie fixe solidarisée avec un carter et une partie mobile axialement capable de déplacer le roulement de butée par rapport au mécanisme d'embrayage. La partie fixe comprend une portion tubulaire intérieure et une portion tubulaire extérieure concentriques et un fond définissant une chambre annulaire borgne. La partie mobile comprend un piston annulaire disposé dans la chambre. Le dispositif de manoeuvre d'embrayage comprend également un élément de manoeuvre solidaire du piston et pourvu d'un alésage coulissant sur la portion tubulaire intérieure de la partie fixe, et une surface extérieure. Le dispositif de manoeuvre d'embrayage comprend un moyen d'étanchéité en contact avec la portion tubulaire extérieure de la partie fixe à l'entrée de la chambre et frottant sur la surface extérieure de l'élément de manoeuvre.

Le moyen d'étanchéité s'emmanche dans l'alésage de la portion extérieure de la partie fixe. Le moyen d'étanchéité est ainsi disposé radialement entre l'élément de manoeuvre et l'alésage de la portion extérieure de la partie fixe.

On dispose ainsi de moyens d'étanchéité très compacts et qui peuvent être solidarisés avec la partie fixe de façon simple. Le moyen d'étanchéité peut comprendre un joint annulaire.

Dans un mode de réalisation de l'invention, le diamètre extérieur du moyen d'étanchéité est légèrement supérieur à l'alésage de la portion extérieure de la partie fixe pour venir s'emmancher avec serrage.

On peut prévoir un ressort pour presser axialement le moyen d'étanchéité vers l'intérieur de la chambre. Le ressort pourra prendre appui sur une surface radiale de l'élément de manoeuvre.

Dans un mode de réalisation de l'invention, l'élément de manoeuvre comprend un épaulement disposé sur sa surface extérieure pour positionner axialement de façon prédéterminée le moyen d'étanchéité par rapport à la portion tubulaire extérieure de la partie fixe.

Avantageusement, l'élément de manoeuvre comprend des protubérances radiales disposées à proximité du piston sur sa surface extérieure et destinées à la retenue axiale du moyen d'étanchéité, notamment avant le montage définitif du dispositif de manoeuvre d'embrayage.

Dans un mode de réalisation de l'invention, le moyen d'étanchéité est de longueur axiale supérieure à la course de la partie mobile par rapport à la partie fixe.

L'alésage de la portion tubulaire extérieure de la partie fixe peut être pourvu d'un chanfrein d'entrée destiné à faciliter la solidarisation du moyen d'étanchéité et de la partie fixe.

Dans un mode de réalisation de l'invention, l'élément de manoeuvre est pourvu de nervures axiales.

Dans un mode de réalisation de l'invention, le joint d'étanchéité comprend une partie radiale en concordance de forme avec la surface extérieure de l'élément de manoeuvre et une partie axiale en contact avec la portion tubulaire extérieure de la partie fixe.

Le joint d'étanchéité peut être de section en L, de section rectangulaire ou de section en U à branches axiales. Dans ce dernier cas, la branche interne du joint d'étanchéité peut être souple pour former un racleur tandis que la branche externe est rigide.

Dans un mode de réalisation de l'invention, le joint d'étanchéité comprend des bourrelets annulaires sur sa surface extérieure en contact avec la portion tubulaire extérieure de la partie fixe.

Grâce à l'invention, on dispose d'un moyen d'étanchéité qui obture en permanence l'entrée de la chambre annulaire tout en étant économique et fabriqué en série, par exemple par moulage par injection d'une matière synthétique. Le moyen d'étanchéité est sensiblement immobile par rapport à la partie fixe ce qui élimine les phénomènes d'usure et de rentrée de particules indésirables sur les surfaces de la partie fixe susceptibles d'être en contact avec le piston.

L'invention sera mieux comprise à l'étude de la description détaillée de quelques modes de réalisation pris à titre d'exemples nullement limitatifs et illustrés par les dessins annexés sur lesquels :
la figure 1 est une vue en coupe axiale du dispositif selon l'invention,
les figures 2 et 3 sont des vues en demi-coupe axiale du dispositif selon l'invention dans deux positions de manoeuvre différentes,
la figure 4 est une demi-coupe transversale selon IV-IV de la figure 3;
la figure 5 est une demi-coupe en élévation du joint d'étanchéité de la figure 4;
la figure 6 est une demi-coupe d'une variante de l'élément de manoeuvre pourvu d'un joint d'étanchéité;
la figure 7 est une coupe partielle selon VII-VII de la figure 6;
la figure 8 est une vue semblable à la figure 2 montrant un autre mode de réalisation de l'invention;
la figure 9 est une vue partielle en coupe axiale d'un autre mode de réalisation de l'invention; et
la figure 10 est une variante de la figure 9.

Tel qu'il est illustré sur les figures, le dispositif de manoeuvre d'embrayage est muni d'un dispositif de commande hydraulique comprenant une partie fixe 1 et une partie mobile 2. La partie fixe 1 est munie d'un alésage 3 et est, en général, montée sur un carter de boîte de vitesses non représenté. La partie fixe 1 comprend une portion tubulaire intérieure la, une portion tubulaire extérieure 1b et une semelle lc. La partie fixe 1 comprend également une chambre annulaire 4 destinée à recevoir un fluide hydraulique introduit par un orifice 5 et définie entre la paroi intérieure 9 formée par la portion tubulaire intérieure la, la paroi extérieure 10 formée par la portion tubulaire extérieure 1b, 1a semelle 1c et un piston 6.

La partie mobile 2 comprend un piston 6 annulaire entièrement logé dans la chambre annulaire 4 et capable de se déplacer axialement sous la pression de fluide hydraulique qui lui est appliqué. Le piston 6 est muni d'un premier joint d'étanchéité 7 en contact avec la paroi intérieure 9 de la chambre annulaire 4 et un second joint d'étanchéité 8 en contact avec la paroi extérieure 10 de la chambre annulaire 4. La partie mobile 2 comprend un élément de manoeuvre 11 capable de transmettre le mouvement axial du piston 6 au roulement de butée 12. L'élément de manoeuvre 11 peut coulisser sur la portion tubulaire intérieure la. Le mouvement axial de l'élément de manoeuvre 11 vers l'extérieur de la partie fixe 1 est limité par un anneau élastique de maintien 13 disposé dans une gorge annulaire 14 de la portion tubulaire intérieure la et faisant saillie par rapport à la paroi intérieure 9.

Le roulement de butée 12 comprend une bague intérieure non tournante 15, une bague extérieure tournante 16, une rangée d'éléments roulants 17 sous forme de billes, une cage de maintien 18 des éléments roulants 17 et une garniture d'étanchéité 19 solidaire de la bague extérieure 16 et en contact de frottement avec la bague intérieure 15. La bague intérieure 15 est en contact avec une surface radiale 11a de l'élément de manoeuvre 11 et est montée sur celui-ci de façon à pouvoir se déplacer radialement par rapport audit élément de manoeuvre 11. L'élément de manoeuvre 11 comprend également une extrémité libre 11b supportant une rondelle élastique 20 qui vient en appui axialement contre la bague intérieure 15 qui est ainsi rendue axialement solidaire de l'élément de manoeuvre 11. Le jeu radial prévu entre la bague intérieure 15 et l'élément de manoeuvre 11 permet un autocentrage de roulement de butée 12 par rapport à l'élément de manoeuvre 11 et à la partie fixe 1.

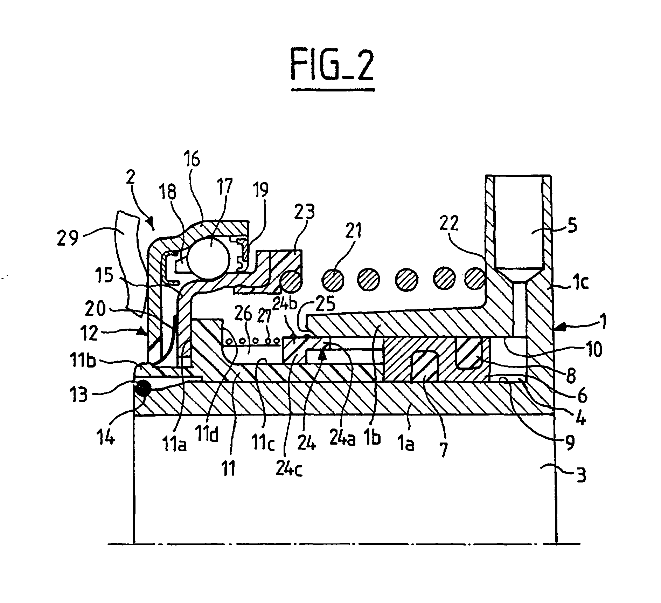

La bague extérieure 16 du roulement de butée 12 est prévue pour être en contact avec un élément du diaphragme d'embrayage 29 (figure 2).

Le dispositif hydraulique de manoeuvre d'embrayage comprend un ressort 21 de mise en précontrainte axiale du roulement 12 contre les éléments du diaphragme d'embrayage 29. Le ressort 21 est en appui, à son extrémité fixe, sur une surface radiale 22 de la partie fixe 1. L'extrémité mobile du ressort 21 est en appui contre la pièce de liaison 23 capable de maintenir radialement le ressort 21. La pièce de liaison 23 est en appui contre la bague intérieure 15 et est solidaire axialement et radialement de cette dernière.

Le dispositif de manoeuvre d'embrayage comprend un joint d'étanchéité 24 disposé radialement entre la paroi extérieure 10 de la chambre annulaire 4 et la surface extérieure 11c de l'élément de manoeuvre 11. Le joint d'étanchéité 24, de section en L, comprend une partie axiale 24a dont la surface extérieure 24b est en contact avec la paroi extérieure 10 et une partie radiale 24c en saillie radialement vers l'intérieur par rapport à la partie axiale 24a et en contact avec la surface extérieure 11c de l'élément de manoeuvre 11.

La portion tubulaire extérieure 1b est pourvue, à proximité de la paroi extérieure 10 de la chambre 4 d'un chanfrein 25 destiné à faciliter l'emmanchement du joint d'étanchéité 24. L'emmanchement est également facilité par le fait que la partie axiale 24a du joint d'étanchéité 24 est de plus faible épaisseur radiale que la partie radiale 24c et est donc relativement souple radialement. Le joint d'étanchéité 24, une fois emmanché sur la paroi extérieure 10, reste sensiblement immobile par rapport à la partie fixe 1 et peut juste se déplacer de quelques millimètres au cours de la durée de vie du dispositif de manoeuvre d'embrayage en direction de l'intérieur de la chambre 4. L'étanchéité entre la partie fixe 1 et le joint d'étanchéité 24 est ainsi garantie. La portion radiale 24c du joint d'étanchéité 24 en contact de frottement avec la surface extérieure 11c de l'élément de manoeuvre 11 garantit là aussi l'étanchéité.

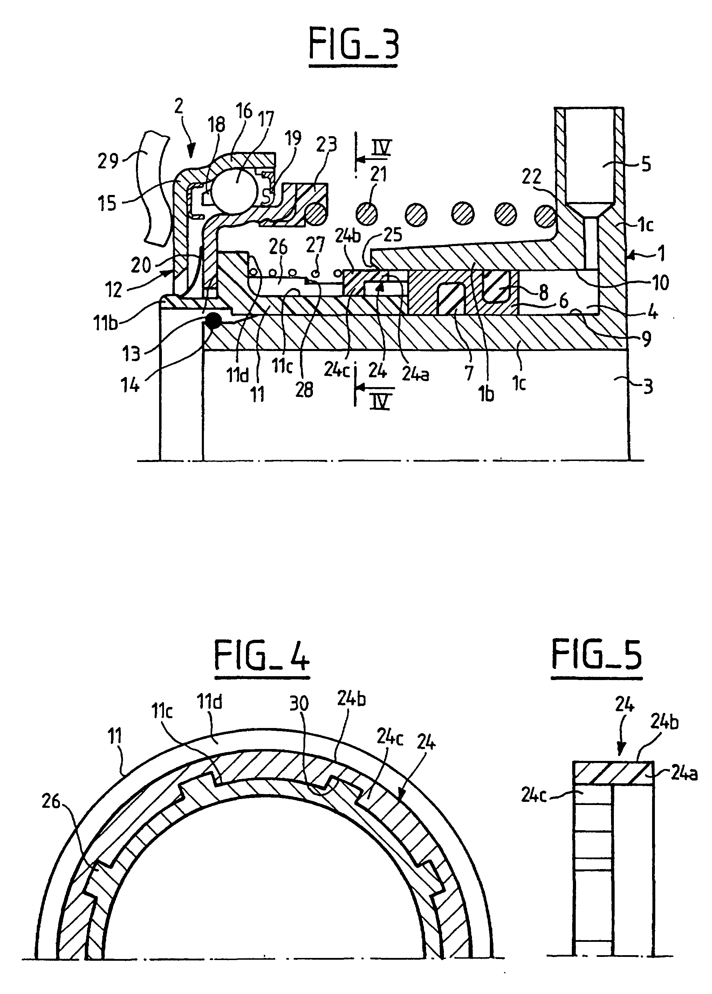

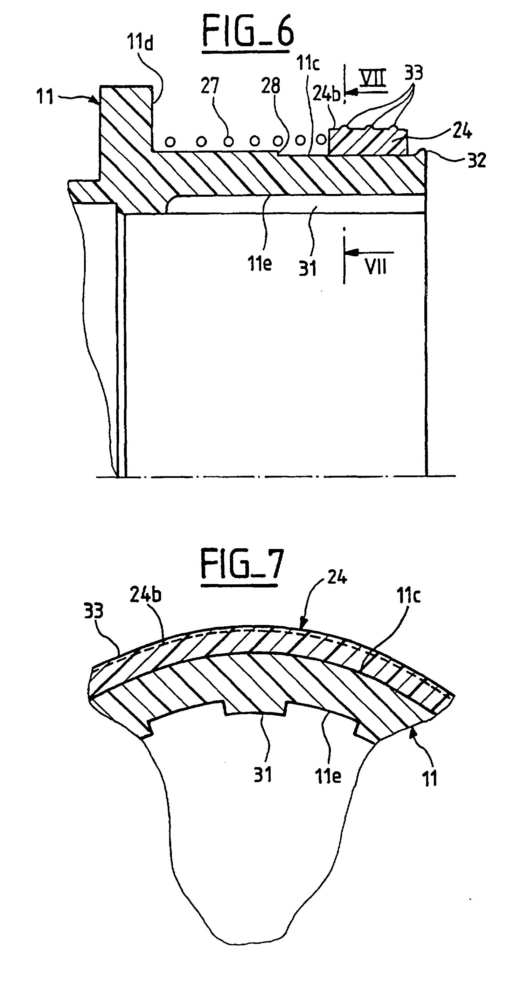

L'élément de manoeuvre 11 est pourvu sur sa surface extérieure 11c d'une pluralité de nervures axiales 26 régulièrement réparties autour de la circonférence de l'élément de manoeuvre 11 dans le but d'augmenter la rigidité de celui-ci et de permettre de réduire son épaisseur. La réduction de l'épaisseur de l'élément de manoeuvre 11 permet de loger radialement le joint d'étanchéité 24 entre ledit élément de manoeuvre 11 et la paroi extérieure 10. Comme on le voit particulièrement sur les figures 4 et 5, la partie radiale 24c du joint d'étanchéité 24 est en concordance de formé avec la surface extérieure 11c pourvue des nervures 26.

Un ressort annulaire 27 est disposé autour des nervures 26 de l'élément de manoeuvre 11 et prend appui sur une surface radiale 11d de l'élément de manoeuvre 11. Le ressort 27 exerce un effort axial permanent en direction de l'intérieur de la chambre 4, sur l'organe d'étanchéité 24 et l'empêche de ressortir de la chambre 4.

Les nervures 26 de l'élément de manoeuvre 11 sont pourvues d'un épaulement radial 28 capable de venir en contact avec le joint d'étanchéité 24 et de déplacer celui-ci par rapport à la partie fixe 1 vers l'intérieur de la chambre annulaire 4. Ainsi, lors de la première mise en service du dispositif de manoeuvre d'embrayage, en position embrayée, l'épaulement 28 provoque l'emmanchement du joint d'étanchéité 24 dans la paroi extérieure de la chambre 4 jusqu'à une position prédéterminée illustrée sur la figure 2. Dans cette position, la chambre 4 contient une faible quantité de fluide hydraulique. Le piston 6 est rentré dans la chambre 4 jusqu'à proximité de la semelle 1c de la partie fixe 1. L'élément de manoeuvre 11 est également en position rentrée ce qui provoque le déplacement du joint d'étanchéité 24 par rapport à la partie fixe 1 sous l'effet de l'épaulement 28. La position axiale de l'épaulement 28 est prévue pour que la partie axiale 24a du joint d'étanchéité s'emmanche partiellement sur la paroi extérieure 10. Le ressort 27 est mis en compression et continue à exercer une poussée axiale sur le joint d'étanchéité. Toutefois, le ressort sera taré de telle sorte que l'effort axial exercé par ledit ressort ne puisse déplacer axialement l'organe d'étanchéité 24 à l'intérieur de la chambre 4, le serrage dudit joint 24 dans la paroi extérieure de la chambre 4 s'opposant à la pénétration du joint 24 sous l'action du ressort 27.

La position débrayée est illustrée sur la figure 3. La chambre 4 a été remplie avec du fluide hydraulique sous pression qui repousse le piston 6 en direction du diaphragme d'embrayage 29. L'ensemble de la partie mobile 2 est ainsi déplacé dans cette direction. Les ressorts 21 et 27 se détendent. Le joint d'étanchéité 24 reste immobile par rapport à la partie fixe 1. Toutefois le dispositif peut s'accommoder d'un léger déplacement axial du joint d'étanchéité 24 dans le sens du mouvement de la partie mobile 2, le joint d'étanchéité 24 restant en permanence en contact avec la partie fixe 1, grâce à la poussée exercée par le ressort 27.

Les figures 4 et 5 illustrent plus particulièrement la concordance de forme entre le joint d'étanchéité 24 et l'élément de manoeuvre 11. La portion radiale 24c du joint d'étanchéité 24 est pourvue de créneaux radiaux 30 de forme correspondant aux nervures 26 de l'élément de manoeuvre 11. L'étanchéité entre l'élément de manoeuvre 11 et le joint 24 est ainsi assurée.

Les particules polluantes ne peuvent donc pénétrer ni par la surface extérieure 24b du joint d'étanchéité 24 ni par l'alésage dudit joint 24 qui vient frotter contre l'élément de manoeuvre 11 car la largeur axiale du joint d'étanchéité 24 constitue une barrière efficace contenant les impuretés à distance axiale suffisante du piston 6.

Si le mécanisme d'embrayage est équipé d'un dispositif de rattrapage d'usure, la position axiale du diaphragme 29 ne subit pas de variation dans le temps pour un état donné, embrayé ou débrayé. La position axiale d'emmanchement du joint d'étanchéité 24 ne variera donc pas. Dans le cas contraire, l'usure de l'embrayage aura pour effet de décaler axialement les doigts du diaphragme 29 vers la butée 12 pour un état donné, embrayé ou débrayé. L'épaulement 28 de l'élément de manoeuvre 11 poussera donc petit à petit le joint d'étanchéité 24 vers l'intérieur de la chambre 4 au fur et à mesure de l'usure de l'embrayage. L'étanchéité s'en trouve ainsi renforcée.

Dans le cas d'une variante où l'élément de manoeuvre 11 est dépourvu d'épaulement, le joint d'étanchéité 24 reste toujours dans une position axiale identique par rapport à l'entrée de la chambre 4 quelle que soit l'usure de l'embrayage et l'état, embrayé ou débrayé, du mécanisme. Le joint d'étanchéité 24 est d'abord simplement poussé axialement par le ressort 27 contre l'entrée de la paroi extérieure 10 de la chambre 4 et assure ainsi son obturation.

Le mode de réalisation illustré sur les figures 6, 7 est semblable à celui des figures précédentes à ceci près que la surface extérieure 11c de l'élément de manoeuvre 11 est cylindrique et dépourvue de nervures. On conserve toutefois l'épaulement 28. L'alésage 11e de l'élément de manoeuvre 11 est pourvu d'une pluralité de nervures axiales 31 destinées à conserver sa rigidité et sa résistance à l'élément de manoeuvre sans en augmenter la masse. La surface extérieure cylindrique 11c de l'élément de manoeuvre 11 est pourvue, à proximité immédiate du piston 6, d'une pluralité de protubérances radiales 32 capables d'assurer la retenue axiale du joint d'étanchéité 24 par rapport à l'élément de manoeuvre 11 afin de constituer un ensemble indémontable facilement manipulable comprenant le joint d'étanchéité 24, le ressort 27 et l'élément de manoeuvre 11.

Le joint d'étanchéité 24 est à section rectangulaire et est pourvu sur sa surface extérieure 24b de trois bourrelets annulaires 33 afin de diminuer les surfaces de frottement avec la paroi extérieure 10 et renforcer l'étanchéité par un effet de chicane.

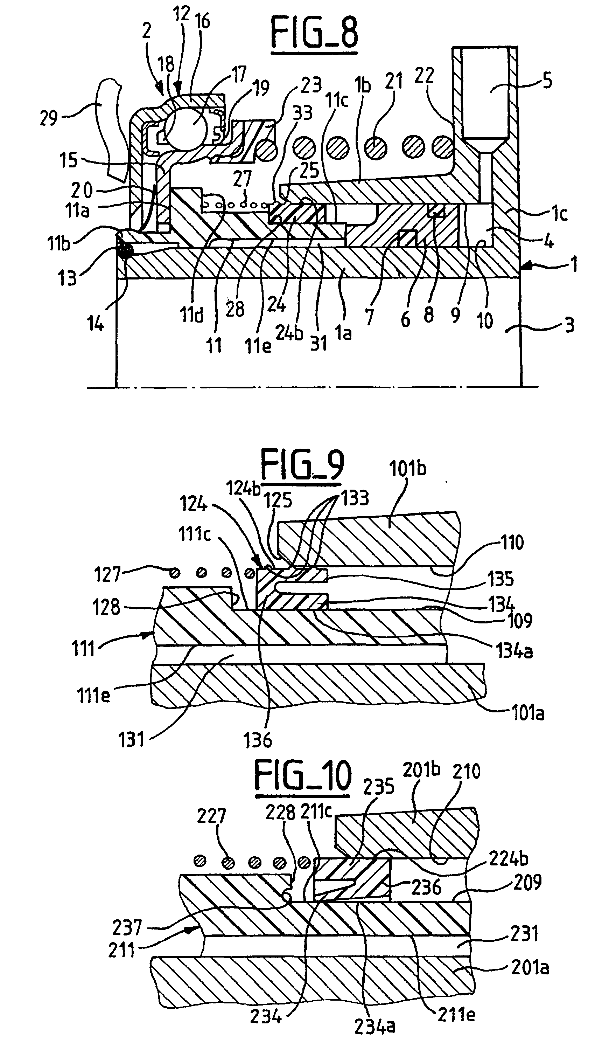

Sur le mode de réalisation de la figure 8, la longueur axiale du joint d'étanchéité 24 a été augmentée et est légèrement supérieure à la course de la partie mobile 2 par rapport à la partie fixe 1 pour empêcher que des particules polluantes déposées sur la surface extérieure 11c lorsque le dispositif est en position débrayée ne parviennent à entrer dans la chambre 4 lors du mouvement de la partie mobile 2 vers la position embrayée, si jamais lesdites particules restaient solidaires de ladite surface extérieure.

Sur la figure 9, les références des éléments semblables à ceux des figures précédentes ont été augmentées du nombre 100. Le joint d'étanchéité 124 est à section en U à branches axiales. La branche interne 134 est pourvue d'un alésage 134a en contact de frottement sur la surface extérieure cylindrique 111c de l'élément de manoeuvre 111. La branche extérieure 135 est pourvue sur sa surface extérieure 124b de trois bourrelets annulaires 133. Les branches interne 134 et externe 135 sont reliées par une portion de liaison 136 du côté de l'épaulement 128, à l'opposé de la chambre. Le joint d'étanchéité 124 est emmanché partiellement sur la paroi extérieure 110. L'extrémité libre de la branche externe 135 est relativement souple radialement ce qui facilite l'emmanchement. De même, la souplesse de la branche interne 134 tend à diminuer les frottements sur l'élément de manoeuvre 111.

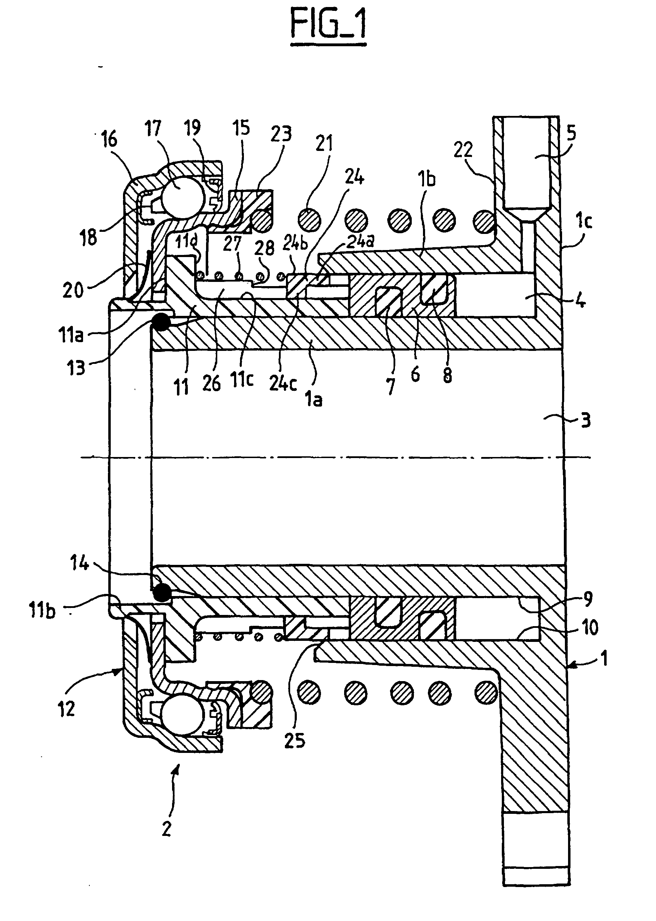

Sur la figure 10, les références des éléments semblables à ceux des figures 1 à 8 ont été augmentées du nombre 200. L'épaulement 228 de l'élément de manoeuvre 211 est pourvu, radialement à proximité de la surface extérieure 211c, d'un creux 237 dans lequel les particules polluantes peuvent rester sans risque d'être entraînées à l'intérieur de la chambre. Le joint d'étanchéité 224 est également à section en U mais à branches d'épaisseur inégale et disposé dans le sens opposé de celui de la figure 9. La branche extérieure 235 est épaisse pour recevoir la poussée du ressort 227 et être fermement emmanchée sur la paroi extérieure 210. La branche intérieure 234 est relativement fine, particulièrement à son extrémité libre de façon à former une lèvre souple de raclage qui tendra à accumuler les particules polluantes et autres impuretés dans le creux 237. La portion de liaison 236 est disposée du côté de la chambre 204.

On peut prévoir d'autres variantes, par exemple avec un élément de manoeuvre non nervuré. On pourrait également supprimer le ressort 27 quand l'élément de manoeuvre est pourvu d'un épaulement qui vient prépositionner axialement le joint d'étanchéité par rapport à la partie fixe 1.

Grâce à l'invention, on obtient un dispositif de manoeuvre d'embrayage très compact et de fabrication économique. Le frottement du joint d'étanchéité sur l'élément de manoeuvre empêche l'intrusion d'impuretés à proximité du piston et dans la chambre de la partie fixe. On réduit ainsi le risque de fuite de fluide hydraulique qui est nuisible au bon fonctionnement de l'embrayage.

## Revendications

1. Dispositif de manoeuvre d'embrayage, du type comprenant un roulement de butée (12) capable d'agir sur un diaphragme de mécanisme d'embrayage, un dispositif de commande hydraulique pourvu d'une partie fixe (1) solidarisée avec un carter et une partie mobile axialement (2) capable de déplacer le roulement de butée par rapport au mécanisme d'embrayage, la partie fixe comprenant une portion tubulaire intérieure et une portion tubulaire extérieure concentriques et un fond définissant une chambre annulaire borgne (4), la partie mobile comprenant un piston annulaire (6) disposé dans la chambre, et un élément de manoeuvre (11) solidaire du piston et pourvu d'un alésage coulissant sur la portion tubulaire intérieure de la partie fixe, et d'une surface extérieure (11c), le dispositif comprenant un moyen d'étanchéité en contact avec la portion tubulaire extérieure de la partie fixe à l'entrée de la chambre (4), et frottant sur la surface extérieure de l'élément de manoeuvre, **caractérisé par le fait que** le moyen d'étanchéité s'emmanche dans l'alésage de la portion extérieure de la partie fixe.

2. Dispositif selon la revendication 1, **caractérisé par le fait que** le moyen d'étanchéité comprend un joint annulaire (24).

3. Dispositif selon la revendication 1 ou 2, **caractérisé par le fait que** le diamètre extérieur du moyen d'étanchéité est légèrement supérieur à l'alésage de la portion extérieure de la partie fixe pour venir s'emmancher avec serrage.

4. Dispositif selon l'une quelconque des revendications précédentes, **caractérisé par le fait qu'**il comprend un ressort (27) pressant axialement le moyen d'étanchéité vers l'intérieur de la chambre.

5. Dispositif selon l'une quelconque des revendications précédentes, **caractérisé par le fait que** l'élément de manoeuvre comprend un épaulement (28) disposé sur la surface extérieure pour positionner axialement de façon prédéterminée le moyen d'étanchéité par rapport à la portion tubulaire extérieure de la partie fixe.

6. Dispositif selon l'une quelconque des revendications précédentes, **caractérisé par le fait que** l'élément de manoeuvre comprend des protubérances radiales (32) disposées à proximité du piston sur sa surface extérieure et destinées à la retenue axiale du moyen d'étanchéité.

7. Dispositif selon l'une quelconque des revendications précédentes, **caractérisé par le fait que** le moyen d'étanchéité est de longueur axiale supérieure à la course de la partie mobile par rapport à la partie fixe.

8. Dispositif selon l'une quelconque des revendications précédentes, **caractérisé par le fait que** l'élément de manoeuvre est pourvu de nervures axiales (26).

9. Dispositif selon l'une quelconque des revendications 2 à 8, **caractérisé par le fait que** le joint d'étanchéité comprend une partie radiale (24c) en concordance de forme avec la surface extérieure (11c) de l'élément de manoeuvre et une partie axiale (24a) en contact avec la portion tubulaire extérieure de la partie fixe.

10. Dispositif selon l'une quelconque des revendications 2 à 8, **caractérisé par le fait que** le joint d'étanchéité est de section en L.

11. Dispositif selon l'une quelconque des revendications 2 à 8, **caractérisé par le fait que** le joint d'étanchéité est de section rectangulaire.

12. Dispositif selon l'une quelconque des revendications 2 à 8, **caractérisé par le fait que** le joint d'étanchéité (124) est à section en U à branches axiales.

13. Dispositif selon la revendication 12, **caractérisé par le fait que** la branche interne du joint d'étanchéité est souple pour former un racleur et que la branche externe est rigide.

14. Dispositif selon l'une quelconque des revendications 2 à 13, **caractérisé par le fait que** le joint d'étanchéité comprend des bourrelets annulaires (33) sur sa surface extérieure en contact avec la portion tubulaire extérieure de la partie fixe.

## Patentansprüche

1. Kupplungsausrückvorrichtung zu der gehören:
ein Ausrücklager (12), das dazu eingerichtet ist, auf eine Kupplungsmembranfeder einzuwirken, eine hydaulische Betätigungsvorrichtung, die ein feststehendes Teil (1), das an einem Gehäuse befestigt ist, und ein in axialer Richtung verschiebliches Teil (2) aufweist, das dazu eingerichtet ist, das Ausrücklager bezüglich der Kupplungsvorrichtung zu verschieben, wobei zu dem feststehenden Teil eine rohrförmige innere Anordnung sowie eine konzentrische rohrförmige äußere Anordnung sowie ein Boden gehören, der eine endseitig geschlossenen Ringkammer (4) definiert, und von denen die verschiebliche Anordnung einen in der Kammer angeordneten ringförmigen Kolben (6) und ein an dem Kolben befestigtes Ausrückelement (11) aufweist, das mit einer Bohrung, die auf der rohrförmigen inneren Anordnung des feststehenden Teils gleitet, und mit einer Außenfläche (11c) versehen ist, und wobei zu der Vorrichtung eine Dichtungseinrichtung gehört, die mit dem rohrförmigen äußeren Abschnitt des feststehenden Teils an dem Eingang der Kammer (4) in Berührung steht und auf der Außenfläche des Ausrückelements gleitet, **dadurch gekennzeichnet, dass** die Dichtungseinrichtung in die Bohrung des äußeren Abschnitts des feststehenden Teils eingesetzt ist.

2. Vorrichtung nach Anspruch 1, **dadurch gekennzeichnet, dass** die Dichtungseinrichtung eine ringförmige Dichtung (24) umfasst.

3. Vorrichtung nach Anspruch 1 oder 2, **dadurch gekennzeichnet, dass** der Außendurchmesser der Dichtungseinrichtung geringfügig größer ist als der Durchmesser der Bohrung des äußeren Abschnitts des feststehenden Teils, um ein klemmendes Einstecken zu ermöglichen.

4. Vorrichtung nach einem der vorhergehenden Ansprüche, **dadurch gekennzeichnet, dass** zu der Vorrichtung eine Feder (27) gehört, die die Dichtungseinrichtung in axialer Richtung nach innen in die Kammer drückt.

5. Vorrichtung nach einem der vorhergehenden Ansprüche, **dadurch gekennzeichnet, dass** das Ausrückelement eine auf der Außenfläche angeordnete Schulter (28) aufweist, die dazu dient, die Dichtungseinrichtung bezüglich des rohrförmigen äußeren Abschnitts des feststehenden Teils in vorgegebener Weise axial zu positionieren.

6. Vorrichtung nach einem der vorhergehenden Ansprüche, **dadurch gekennzeichnet, dass** das Ausrückelement auf seiner Außenfläche in der Nähe des Kolbens radiale Vorsprünge (32) aufweist, die dem axialen Halt der Dichtungseinrichtung dienen.

7. Vorrichtung nach einem der vorhergehenden Ansprüche, **dadurch gekennzeichnet, dass** die Dichtungseinrichtung eine axiale Länge aufweist, die größer ist als der Weg, den das verschiebliche Teil auf dem feststehenden Teil zurücklegt.

8. Vorrichtung nach einem der vorhergehenden Ansprüche, **dadurch gekennzeichnet, dass** das Ausrückelement mit axialen Rippen (26) versehen ist.

9. Vorrichtung nach einem der Ansprüche 2 bis 8, **dadurch gekennzeichnet, dass** die Dichtungseinrichtung einen radialen Abschnitt (24c), dessen Form mit der Außenfläche (11c) des Ausrückelements zusammenpasst, und einen axialen Abschnitt (24a) aufweist, der in Berührung mit dem rohrförmigen äußeren Abschnitt des feststehenden Teils steht.

10. Vorrichtung nach einem der Ansprüche 2 bis 8, **dadurch gekennzeichnet, dass** die Dichtungseinrichtung einen L-förmigen Querschnitt aufweist.

11. Vorrichtung nach einem der Ansprüche 2 bis 8, **dadurch gekennzeichnet, dass** die Dichtungseinrichtung einen rechteckigen Querschnitt aufweist.

12. Vorrichtung nach einem der Ansprüche 2 bis 8, **dadurch gekennzeichnet, dass** die Dichtungseinrichtung (124) einen U-förmigen Querschnitt mit Flanken in axialer Richtung aufweist.

13. Vorrichtung nach Anspruch 12, **dadurch gekennzeichnet, dass** der innere Flankenabschnitt der Dichtungseinrichtung nachgiebig ist, um einen Abstreifring zu bilden, und dass die äußere Flanke starr ist.

14. Vorrichtung nach einem der Ansprüche 2 bis 13, **dadurch gekennzeichnet, dass** die Dichtungseinrichtung auf ihrer Außenumfangsfläche Ringwulste (33) trägt, die mit dem rohrförmigen äußeren Abschnitt des feststehenden Teils in Berührung stehen.

## Claims

1. Clutch operating device of the type comprising a thrust rolling bearing (12) capable of acting on a diaphragm of the clutch mechanism, a hydraulic control device provided with a fixed part (1) secured to a casing and an axially moving part (2) capable of moving the thrust bearing with respect to the clutch mechanism, the fixed part comprising an interior tubular portion and an exterior tubular portion which are concentric and an end face defining a blind annular chamber (4), the moving part comprising an annular piston (6) arranged in the chamber, and an operating element (11) secured to the piston and provided with a bore sliding over the interior tubular portion of the fixed part and with an exterior surface (11c), the device comprising a sealing means in contact with the exterior tubular portion of the fixed part at the entry to the chamber (4) and rubbing on the exterior surface of the operating element, **characterized in that** the sealing means fits into the bore of the exterior portion of the fixed part.

2. Device according to Claim 1, **characterized in that** the sealing means comprises an annular seal (24).

3. Device according to Claim 1 or 2, **characterized in that** the outside diameter of the sealing means is slightly greater than the bore of the exterior portion of the fixed part so that these fit together as a tight fit.

4. Device according to any one of the preceding claims, **characterized in that** it comprises a spring (27) pressing the sealing means axially towards the inside of the chamber.

5. Device according to any one of the preceding claims, **characterized in that** the operating element comprises a shoulder (28) arranged on the exterior surface to position the sealing means axially in a predetermined way with respect to the exterior tubular portion of the fixed part.

6. Device according to any one of the preceding claims, **characterized in that** the operating element comprises radial protrusions (32) arranged near the piston on the exterior surface and intended to axially retain the sealing means.

7. Device according to any one of the preceding claims, **characterized in that** the sealing means is of an axial length that exceeds the travel of the moving part with respect to the fixed part.

8. Device according to any one of the preceding claims, **characterized in that** the operating element is provided with axial ribs (26).

9. Device according to any one of Claims 2 to 8, **characterized in that** the seal comprises a radial part (24c) which mates in terms of shape with the exterior surface (11c) of the operating element and an axial part (24a) in contact with the exterior tubular portion of the fixed part.

10. Device according to any one of Claims 2 to 8, **characterized in that** the seal has an L-shaped cross section.

11. Device according to any one of Claims 2 to 8, **characterized in that** the seal has a rectangular cross section.

12. Device according to any one of Claims 2 to 8, **characterized in that** the seal (124) has a U-shaped cross section with axial branches.

13. Device according to Claim 12, **characterized in that** the internal branch of the seal is flexible so as to form a wiper and **in that** the external branch is rigid.

14. Device according to any one of Claims 2 to 13, **characterized in that** the seal comprises annular bulges (33) on its exterior surface in contact with the exterior tubular portion of the fixed part.
